# EUROPEAN PATENT APPLICATION

(11) **EP 1 746 264 A1**
(43) Date of publication of application: **24.01.2007**
(21) Application number: 05380147.8
(22) Date of filing: 30.06.2005
(51) Int. Cl.: F01N 3/022, F01N 3/021

(54) **Constructive disposition in a particulate matter sealing device existing in gas originating from fuel burning and/or chemical reaction when running internal combustion engines**

(71) Applicant: Varkala Sangiovani, Sergio, Santana SP (BR)
(72) Inventor: Varkala Sangiovani, Sergio, Santana SP (BR)
(74) Representative: Isern-Jara, Jaime

(57) **Abstract**

Constructive disposition introduced into a particulate matter sealing device existing in gas originating from fuel burning and/or chemical Reactions when running combustion engines, a value-adding solution to the sealing product both from the point of view of minimizing the impact caused in nature by particulate matter uncontrolled emission, that its application on mobile or stationary combustion engines, does not interfere with their good performance, thanks to an unpublished constructive and functional concept that in addition to the technical nature advantages allows it to present low manufacturing cost. In order to make the hereinafter-claimed invention feasible, a functional concept is applied to the particulate matter sealing device, which leads to particulate matter flow speed reduction (Fp), which is released in the exhaust pipe (1), a reduction verified thanks to mechanical shocks of these particles at manifold blade components (C4) and manifold coil (C5), causing particles to agglutinate.

## Description

This patent application deals with a "CONSTRUCTIVE DISPOSITION INTRODUCED INTO A PARTICULATE MATTER SEALING DEVICE EXISTING IN GAS ORIGINATING FROM FUEL BURNING AND/OR CHEMICAL REACTIONS WHEN RUNNING COMBUSTION ENGINES" where applicant presents an unpublished solution for treating gases emitted by combustion engines, commonly released into the environment through exhaust pipes of moving equipment, such as automotive vehicles and/or stationary equipment, for industrial use, whose aim is to cooperate with environmental pollution rate reduction, and consequently improve living conditions, as far as the flora and fauna of planet Earth are concerned.

The demand for a solution of this nature is latent to the extent in which present-day mankind sees at naked eyes the nefarious effects caused by environmental degradation, worldwide, pollutant gas emission having consistent participation in forming the contaminated environment to which the entire planet population is exposed.

In this manner the now claimed invention presents a series of advantages, which can be ranked as ecological order advantages, namely the invention directly implies improvements in the environment, because one sees significant reduction of high-particulate matter content gases, a fact contributing to minimize, for instance, the harmful effects of the environmental phenomenon known as "greenhouse effect", being that all preliminary data obtained from the particulate matter seal indicate a reduction ranging between 60% and 90% of particulate matter emission.

In turn, it is possible to identify operating order advantages, where by using the now claimed invention the combustion engine performance is not compromised, thanks to an exclusive constructive concept that does not interfere with back compression in exhaust pipes, this positive feature having direct implication in fuel consumption saving and further it does not overload the engine components during its running, increasing its service life and minimizing the need for corrective maintenance.

The now claimed seal also has an advantage from the point of view of the retaining product itself, where said constructive concept is shown to be of outmost simplicity and practicability, a factor that collaborates to reducing overhead involved in its manufacture and therefore make the end price accessible to a more popular consumer market.

The economic aspect is further evidenced when one takes into account that the now claimed seal can be used indefinitely, because when it is shown to be saturated it can be removed and washed in a proper location, eliminating accumulated particulate matter, always in compliance with environmental legislation standards in effect, and can be reinstalled and allowed to return to its operation.

There is still one last differential to be mentioned, referring to ergonomic features, in this specific case that translated into low-level noises and vibration of the exhaust pipe system.

Due to all these aspects applicant understands that the now claimed solution represents an innovation known by the technical state, notoriously in the application area of the technology industry for sealing element devices.

As already known by the technical state a wide variety for particulate matter present in gases generated by combustion and/or chemical reactions is made available. However, after a detailed study of results obtained from using these devices, applicant can, via value analysis, identify a series of faulty points in their constructive and functional system, that leads to compromise the main goal to be achieved, namely, reducing environmental pollution rates.

For this assertion to become affirmative applicant has based his studies from the premise that the functional efficiency of combustion engines is directly related to correct air and fuel exhaust, or in other words, there must be a suitable amount of these components and at a given, precise time, which becomes fundamental to gas emission control, such gases that take with them a considerable amount of particulate matter.

Upon defining the mandatory condition for a perfect combustion engine performance applicant begins to have a consistent reference to identify the causes of low performance of these engines, wherever they are in intended manner or further by sheer negligence in relation to preventive and corrective maintenance, the lack of suitable engine tune-up makes a difference in the ideal proportion of air and fuel, preventing obtaining at the precise time the mandatory condition for its correct operation, having as a consequence particulate matter gas emission increase top the environment, being that, poor fuel burning is also translated by the amount of oxygen in the air 23% remaining air is burned making final quality of fuel burning difficult.

Particulate matter composition varies in accordance with the composition of the fuel to be burned, with the engine state of conservation and further its operating temperature, being that this particulate matter is formed from the agglutination of unburned hydrocarbons, water and impurities of this same fuel to a carbon chemical element core.

In turn, particulate matter shows a large dimensional variation of particles, such variation leading any kind of porous filter to early saturation, which in turn cause functional overload on engine components, such overload resulting in increased fuel consumption, engine power drop and increase of emitted gases during the combustion process.

One has further to consider the fact that particulate matter remains suspended in the air, because the above-mentioned filtering ensure its full sealing, and in this manner, smaller-size particles can be inhaled by the individual, lodging themselves in deep areas of the human lungs, for example, being an irritating agent to sight and the breathing system, which mainly afflict children and the elderly, particularly in the season of the year when temperatures are extremely low, a fact that potentializes particulate matter concentration.

This entire contamination process potentializes carcinogenic action that possible exists in particulate matter.

One further considers the undesirable effects observed in the atmosphere, such and visibility and contrast reduction, and also increased "greenhouse effects", where, studies show that particulate material when deposited on mountaintop glaciers or the planet's poles concentrates solar energy producing thawing and increased global temperature.

In order to bestow more credibility on the above-described subject applicant mentions an official document issued by the renowned, trustworthy company of the automotive industry, Mercedes-Benz do Brazil, issuing in the form of a report by the Development and Experimental Engineering Management, upon the development of a filter type for particulate matter, such document being called "Commercial vehicles and the environment".

In addition to this study, the existence is known of specific tests for a particulate matter filter version used by the vehicle fleet circulating in the urban area, this study, in turn, being undertaken by Mercedes-Benz AG. - Germany, where a version of the sealing device is used whose filtering is performed by a ceramic wire network rolled in a pipe, which in turn is installed inside a housing, which replaces the muffling element installed in the exhaust pipe of the automotive vehicle.

In this case a catalytic regeneration system is employed in particulate matter burning, which is deposited in the filter, keeping gas restriction within levels acceptable by environmental legislation in force, being that the device is automatically activated during the automotive vehicle operation.

Notwithstanding the rumored efficiency of the described and known technical state of the seal system, it is known that it has high manufacturing costs, and therefore being impracticable from the commercial point of view, at least for its application in the great majority of automotive vehicles in circulation.

Having said this, applicant, taking advantage of undeniable available advances and also using a serious study and observation of particulate matter behaviour, characteristics and composition, a study backed by conclusive trials and tests on obtained effectiveness, particulate matter sealing type product has been developed, identified in this paper by the initials "R.M.P.", highly efficient, reducing its level in the environment, in order to cooperate with improving environmental conditions on planet Earth, where allied to this aspect keeps usual back compression conditions found in combustion engines, preventing fuel consumption increase and reducing the need for corrective maintenance, being a supplement to a feasible solution from the industrial and commercial point of view.

Supplementing this description, in order to obtain better understanding of this characteristics of this invention claim and application, this description is accompanied, as attachment, a set of drawings where a form of preferred performance is made graphically for the particulate matter sealing device, which is accompanied by five constructive variants, aimed at demonstrating how encompassing its application is, where:
Figure 1 is a representation in view perspective of the preferred form of performing the now claimed particulate matter sealing device invention;
Figure 2 is a view perspective of the preferred performance manner of the now claimed particulate matter sealing device invention;
Figure 3 is a blown up perspective of the preferred performance manner of the now claimed particulate matter sealing device invention;
Figure 4 is a side-section view representation of the preferred performance manner of the now claimed particulate matter sealing device invention, demonstrating its functional concept;
Figure 5 is a blown up perspective view of the first variant of the preferred performance manner of the now claimed particulate matter sealing device invention;
Figure 6 is a side-section view perspective of the first variant of the preferred performance manner of the now claimed particulate matter sealing device invention, demonstrating its functional concept;
Figure 7 is perspective view representation of a second variant of the preferred performance manner of the now claimed particulate matter sealing device invention;
Figure 8 is a blown up perspective view of a second variant of the preferred performance manner of the now claimed particulate matter sealing device invention;
Figure 9 is a side-section view perspective of a second variant of the preferred performance manner of the now claimed particulate matter sealing device invention, demonstrating its functional concept;
Detail 1 is a blown up front view representation of a blade element pertaining to the manifold blades;
Detail 2 is a blown up view representation of the manifold coil component with its respective component elements;
Figure 10 is an upper view representation a third variant of the preferred performance manner of the now claimed particulate matter sealing device invention;
Figure 11 is an upper view representation a fourth variant of the preferred performance manner of the now claimed particulate matter sealing device invention;
Figure 12 is a frontal view representation a fourth variant of the preferred performance manner of the now claimed particulate matter sealing device invention;
Figure 13 is a back view representation a fifth variant of the preferred performance manner of the now claimed particulate matter sealing device invention;
Figure 14 is a side-section view perspective of a fifth variant of the preferred performance manner of the now claimed particulate matter sealing device invention, demonstrating its functional concept.

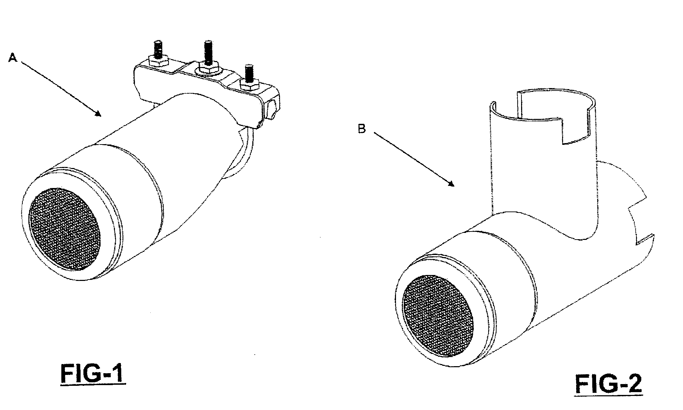

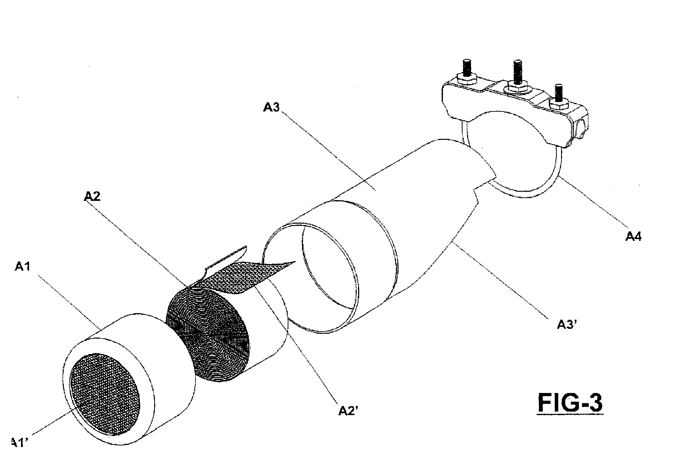

With reference to the drawings illustrating this invention patent application, figures 1, 3 and 4 respectively refer to the manner of preferred performance for the horizontal particulate matter sealing device (A), applied in horizontal-type exhaust outlets, which shows a constructive concept consisting of a frontal canopy (A1), notably with tubular wall and frontal cover (A1'), which is formed by hollow elements, forming a sieve-shaped representation, where treated gas outflow is possible (Fa).

The frontal canopy component (A1), receives inside the manifold coil component (A2), which presents a braided mesh element (A2'), concocted in (Fp) originating from the gas flow (Fg).

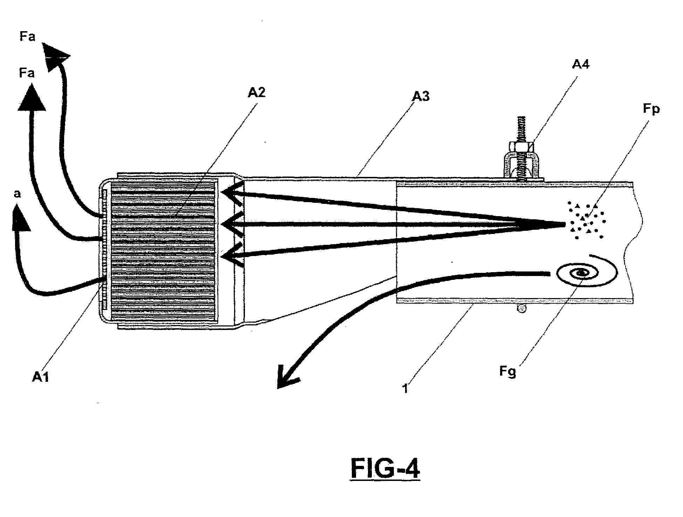

In turn, the set consisting of the frontal canopy components (A1) and manifold (A2) is fastened to the main housing component (A3), which presents a tubular shape, being that in its back and lower portion, a chamfer is defined (A3'), whose primary function resides in assisting gas outflow (Fg), required for relieving the saturation of the manifold coil component (A2) as indicated in figure 4.

In time, the main housing component (A3) is fastened to the exhaust type (1) through a clamping component (A4).

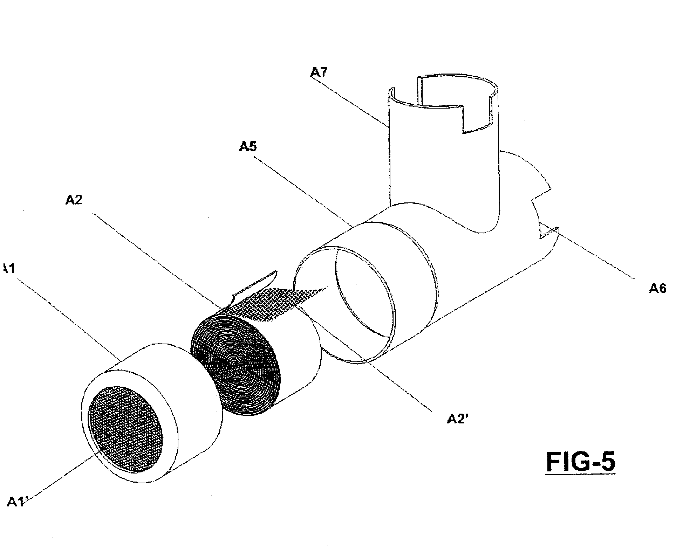

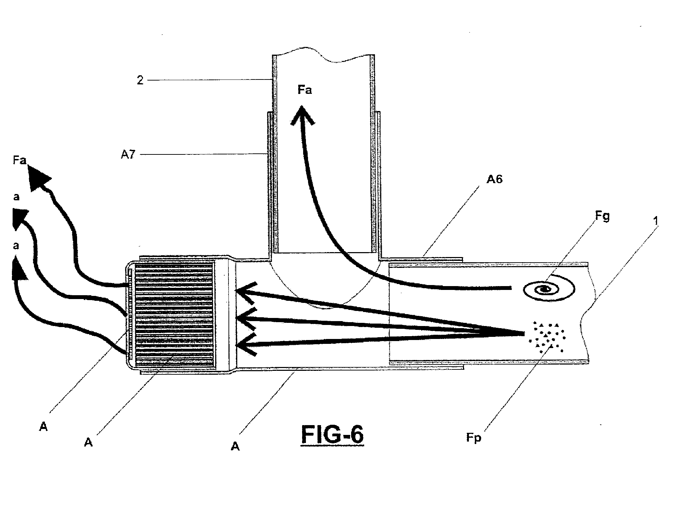

A first variant to the preferred performance manner is graphically represented through figures 2, 5 and 6 respectively, through the vertical particulate matter sealing device (B), being that it presents the same frontal canopy components (A1) and manifold coil (A2), being differentiated in relation to the main housing component (A5), where it has a horizontal packing nozzle (A6) where the exhaust pipe fastening is located (1), being that in perpendicular position to the main body a vertical packing nozzle is predicted (A7), which receives the vertical exhaust pipe fastening (2) whereby part of the treated gas flow passes (Fa), as represented by figure 6.

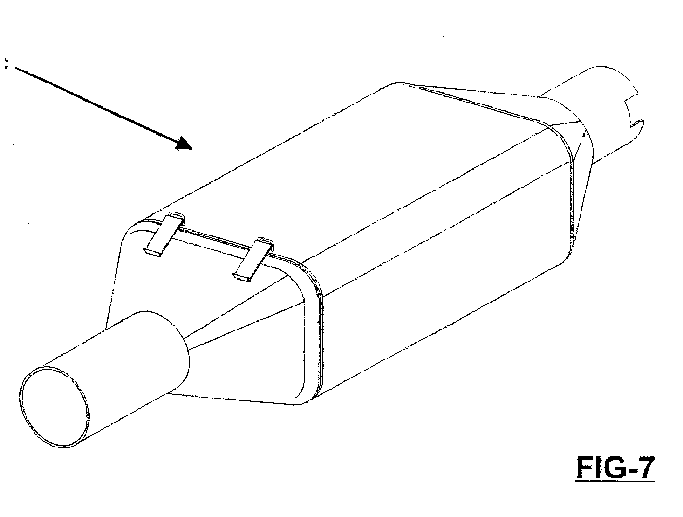

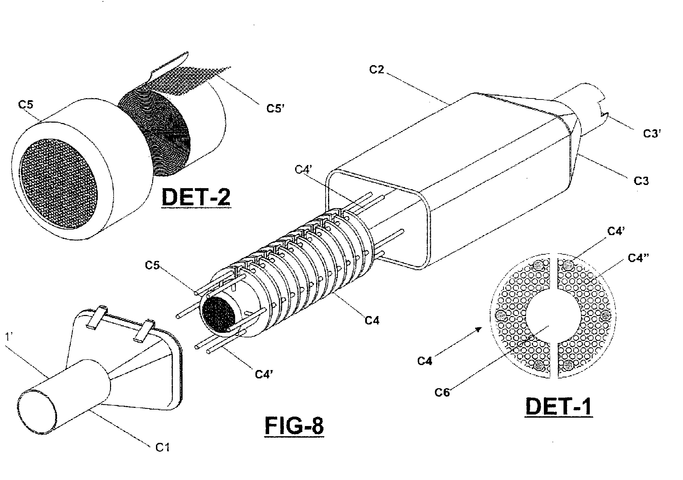

A second variant to the preferred performance manner is graphically represented through figures 7, 8 and 9 respectively and detail 1, through the enclosed particulate matter retaining device C), which presents a differentiated constructive concept in relation to the previously described models, that obeys the constructive similarity criterion, and can therefore be an integral part of the patent claiming picture in description.

The constructive concept of the enclosed particulate matter sealing device (C), is based on a front cover component (C1), trapezoidal trunk-shaped, being that in its end portion the front fitting area is defined (C1') destined for fastening it to the exhaust pipe (2).

This font cover component (C1) is assembled together with the main housing component (C2), which is in tubular shape with rectangular cross-section.

The interior of the main housing component (C2), receives the manifold blade component assembly (C4), whose useful area is permeated by retaining holes (C4"), which are supported by structural rod elements (C4'), as indicated in detail 1

In turn, manifold blade components (C4) present a hollow area (C6) in their central region.

Together with the manifold blade component frontal portion (C4) the manifold coil component is fastened (C5) presenting a braided mesh element (C5'), concocted in knitted steel-based material, as indicated in detail 2.

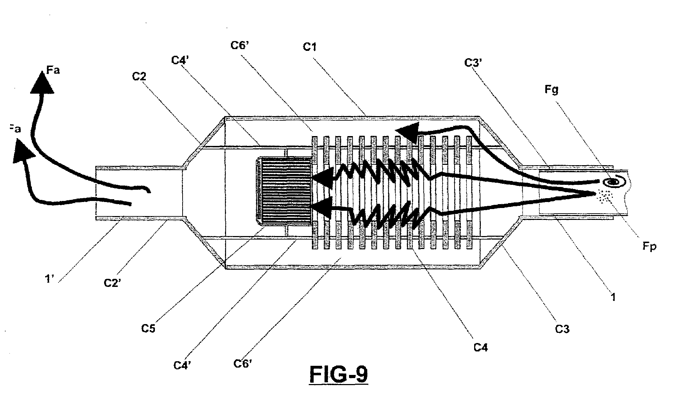

The above-described constructive concept further results from the formation of a main decompression (C6'), as represented in figure 9.

Finally, the back portion of the main housing component (C2), is contemplated with a back cover (C3), this one with a similar profile and structure to the one observed for the front cover component (C1), being that in its end portion the front fitting area is defined (C3') destined for fastening it to the exhaust pipe (1).

The front cover component inner walls (C1) and the back cover (C3), present the trapezoidal trunk-shaped profile as in order to provide a suitable assembly of the manifold blade components (C4) through their interference with structural rod elements (C4').

Applicant stresses that the economic aspect refers to a low-cost solution for solution performance manners described in this paper, where the particulate matter sealing device (A), vertical particulate matter sealing device (B) and enclosed particulate matter sealing device (C) are manufactured by using low-cost raw material, such as steel and aluminum.

The enclosed particulate matter-sealing device (C) can be credited with a last positive aspect, which resides in the fact that once it is installed it allows eliminating the automotive vehicle-muffling component.

In order to bestow greater credibility to the constructive and functional concepts introduced in order to make the now claimed invention feasible, applicant now describes, in the following paragraphs, the scientific foundation that has generated the differentiated qualities previously described in this paper.

Applicant has based his studies on the knowledge that in gas emission (Fg) with particulate matter (Fp), chemical element molecules when released from the exhaust pipe to the atmosphere, perceive an expansion, where particulate matter is committed by the release inertia, tending in this manner to make a straight-line route with a small dispersal degree caused by the mentioned gas expansion.

The primary function of the enclosed particulate matter sealing device (C) resides in causing the particulate matter (Fp) released by gases (Fg), once it is involved by said inertia, to have its speed reduced, a reduction that should reach zero speed, which is justified by a series of mechanical shocks against the walls of the manifold blade components (C4) and manifold coil component (C5), retaining and agglutinating said particles, therefore, such agglutination is characteristic of carbon-based elements making up the particulate matter.

Manifold blade components (C4) in turn are structured by structural rod elements (C4'), so that it allows them to be spatially positioned and parallel among them.

In turn, the manifold coil component (C5) shows a braided mesh element (C5'), concocted in knitted steel-based material, but this component creates a treated gas outflow restriction around 27%.

In order to prevent a back compression effect at the exhaust system, caused by the above-mentioned gas outflow restriction, the constructive concept of the enclosed particulate matter-sealing device (C) defines that manifold blade components (C4) present a hollow area (C6) in their central region.

Allied to this hollow area (C6) a main decompression area is also defined (C6'), being that their sum potentializes decompression inside the enclosed particulate matter-sealing device (C) upon gas expansion.

In order to have the desired effect feasible a mandatory condition is that the area resulting from the sum between the hollow area (C6) between the manifold blade components (C4) and the main decompression area (C6'), is to be at least equal to the area found in the exhaust pipe (1).

Applicant further makes a reservation in order the make the nature of the particulate matter sealing device explicit (C) which does not have the primary function of a filter, because it prevents with the above-described feature loss of the combustion engine output, keeping fuel consumption suitable and increasing its service life time.

The particle sealing capacity afloat the manifold coil component (C5), can be predicted through a simplified formula, upon its utilization in automotive vehicles, where:
Ssaturation = Vr* Ts, being:
Ssaturation = Space run by the vehicle until saturation of the manifold coil component saturation;
Vr = Relative average speed of the combustion engine shaft transfer to the vehicle's tires;
Ts = Saturation time analysed by the particulate matter emission volume emitted by the combustion engine versus filling the total volume of the manifold coil component.

The practical result observed by applying this formula reports to an estimated mean for an automotive vehicle emitting 0.0048849 grams of particulate matter per minute, where saturation of the manifold coil component (C5) will occur after running approximately 13,000 kilometres, which is translated into high durability, allied to the fact that once saturation is reached the enclosed particulate matter sealing device (C) can be easily removed for washing in an appropriate location, where at the end of this washing it can be assembled again at the automotive exhaust system, being renewed to perform without problems for the next 13,000 kilometres.

Finally, in relation to ergonomic use features it is translated into low-level noises and vibration of the exhaust pipe system, this vibration is obtained thanks to the transformation sound waves into mechanical energy at the manifold blade component walls (C4) and manifold coil (C5).

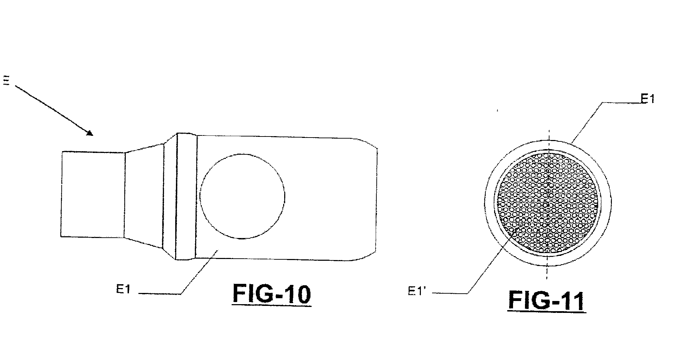

In order to expand the scope of possible applications for the now claimed particulate matter seal applicant illustrates a third constructive variant for it, represented by figure 10, being very resembling to the model presented for the vertical particulate matter sealing device (B), but it presents as a differential the main housing (D), whose end portion is defined by a closed ball-shaped terminal (D1).

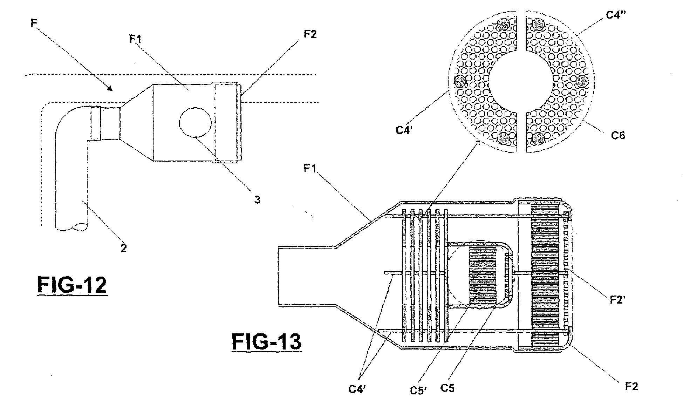

In turn, figures 11 and 12 are part of graphic representation of the fourth constructive variant, which presents a main housing (E) whose end portion receives the assembly of a screen (E1), whose function resides in providing first stage of treated gas release (Fa).

Applicant further presents a fifth constructive variant, represented by figures 13 and 14 respectively, where the particulate matter seal (F) is installed at the end of a vertical exhaust pipe (2), in the back upper portion of a collective transport vehicle, being defined by a main housing (F1), whose side presents a decompression hole (3), this housing receiving in its nozzle the assembly of a cover component (F2), which presents hollow elements (F2').

The interior of the main housing (F1) receives the assembly of manifold blade components (C4), which are permeated by sealing holes (C4") and manifold coil (C5), this assembly being supported by structural rod elements (C4'), where said components are identical to the ones applied at the second constructive variant, called enclosed particulate material sealing device (C).

Though the hereinafter-claimed invention has been explained with reference to the graphic representation of its specific drawings the hereinafter-mentioned explanation is of illustrative nature, the invention being limited only by the claims attached to this paper.

Due to all that has been described and illustrated that it deals with a "CONSTRUCTIVE DISPOSITION INTRODUCED INTO A PARTICULATE MATTER SEALING DEVICE EXISTING IN GAS ORIGINATING FROM FUEL BURNING AND/OR CHEMICAL REACTIONS WHEN RUNNING COMBUSTION ENGINES", which perfectly fits into the standards governing the Invention Patent, in light of the Industrial Property Law, due to filling an important gap existing in the market, moreover because its provides a technical, operating alternative in particulate matter sealing systems, being worthy due to what has been exposed and as a consequence, of the respective privilege.

## Claims

1. ^{ST} ) Constructive disposition introduced into a particulate matter sealing device existing in when running combustion engines gas originating from fuel burning and/or chemical reactions" **characterized by** the solution in particulate matter sealing device being able to be presented in a first configuration called horizontal particulate matter sealing device (A); vertical particulate matter sealing device (B) and enclosed particulate matter sealing device (C);

2. ^{nd} ) Constructive disposition introduced into a particulate matter sealing device existing in gas origination from fuel burning and/or chemical reactions when running combustion engines" according to the claim 1, **characterized by** the horizontal particulate matter sealing device (A) consisting of a frontal canopy component (A 1) with tubular wall and frontal cover (A1') connected to the exhaust pipe (2); a manifold coil component ( A 2), which presents a braided mash element ( A 2'), concocted in knitted steel-based material; a main housing component ( A 3 ), which presents a tubular shape, whose back and lower portion, is defined by a chamfer ( A 3'), this one being fastened to the exhaust pipe ( 1 ) by a clamping component ( A 4 );

3. ^{rd} ) " Constructive disposition introduced into a particulate matter sealing device existing in gas originating from fuel burning and/or chemical reactions when running combustion engines "according to clam 1 and 2 respectively, **characterized by** the vertical particulate matter sealing device ( B ) presenting as a differential main housing component ( A5 ), where it presents a horizontal fitting nozzle (A6 ) fastened to the exhaust pipe ( 1 ), being that in perpendicular position to the main body a vertical fitting nozzle is predicted ( A7 ), fastened to the exhaust pipe ( 2 )

4. ^{th} ) " Constructive disposition introduced into a particulate matter sealing device existing in gas originating from fuel burning and/or chemical reactions when running combustion engines" according to claim 1, **characterized by** the enclosed particulate matter sealing device ( C ), consisting of a front cover component ( C1 ), trapezoidal trunk-shaped, being that in its end portion the front fitting area is defined (C1') fastened to the exhaust pipe ( 1 ); a main housing component ( C 2 ), this one tubular shaped with rectangular cross-section whose interior receives manifold blade components ( C 4 ) and manifold coil ( C 5 ); a back cover component ( C 3 ), this one with similar profile and structure to the one observed for the front cover component ( C 1 ), being that in its end portion the front fitting area is defined ( C 3') also fastened to the exhaust pipe ( 1 );

5. ^{th} ) " Constructive disposition introduced into a particulate matter sealing device existing in gas originating from fuel burning and/or chemical reactions when running combustion engines" according to clam 4, **characterized** manifold blade components ( C 4 ) presenting a hollow area ( C 6) and further being separated and laid out in parallel formation among them;

6. ^{th} ) Constructive disposition introduced into a particulate matter sealing device in gas originating from fuel burning and/or chemical reactions when running combustion engines" according to claim 4, **characterized by** the manifold coil component (C5) presenting a braided mesh element ( C5'), concocted in knitted steel-base material;

7. ^{th} ) " Constructive disposition introduced into a particulate matter sealing device existing in gas originating from fuel burning and/or chemical reactions when running combustion engines" according to claim 4, **characterized by** the manifold blade component ( C5 ) being assembled together with the manifold blade components ( C4 ), which in turn present structural rod elements ( C4') whose ends fit into the front cover component inner walls ( C1 ) and back to cover ( C3 );

8. ^{th} ) "Constructive disposition introduced into a particulate matter sealing device existing in gas originating from fuel burning and/or chemical reactions when running combustion engines" according to claims 4, 5, 6 and 7 respectively **characterized by** the formation of a main decompression area (C6');

9. ^{th} ) " Constructive disposition introduced into a particulate matter sealing device existing in gas originating from fuel burning and/or chemical reactions when running combustion engines" according to claims 5 and 8 respectively, **characterized by** the area resulting from the sum between the hollow area ( C6 ) between manifold blade components( C4 ) and the main decompression area ( C6'), being at least equal the other area found in the exhaust pipe ( 1 );

10. ^{th} ) " Constructive disposition introduced into a particulate matter sealing device existing in gas originating from fuel burning and/or chemical reactions when running combustion engines" according to claims 4, 5 and 6 respectively, where particulate matter sealing is **characterized by** particulate matter flow speed ( Fp ) through mechanical shocks on the manifold coil component walls (C5), being that these particles remain retained with the braided mesh element ( C5'), being that a second amount of particulate matter is retained with the manifold blade components ( C4 );

11. ^{th} ) " Constructive disposition introduced into a particulate matter sealing device existing in gas originating from fuel burning and/or chemical reactions when running combustion engines" according to claim 10, **characterized by** particulate matter agglutination in detriment of new gas or unspecific matter formation;

12. ^{th} ) " Constructive disposition introduced into a particulate matter sealing device existing in gas originating from fuel burning and/or chemical reactions when running combustion engines" according to claim 9, **characterized by** preventing the occurrence of the back compression phenomenon upon running the combustion engine, even when the manifold coil component ( C5) is found in a state of saturation.
